Europäisches Patentamt

European Patent Office

Office européen des brevets

(11) Publication number: **0 274 208**
**A1**

(12) # EUROPEAN PATENT APPLICATION

(21) Application number: 87310333.7

(22) Date of filing: 23.11.87

(51) Int. Cl.⁴ **A22B 5/16** , A22B 5/06 ,
A22B 7/00

(30) Priority: 23.11.86 NZ 217792

(43) Date of publication of application:
13.07.88 Bulletin 88/28

(84) Designated Contracting States:
**BE DE FR GB NL SE**

(71) Applicant: OTAKI ABATTOIRS LIMITED
**Riverbank Road**
**Otaki(NZ)**

(72) Inventor: **Nicholson, Bruce**
**Riverbank Road**
**Otaki(NZ)**

(74) Representative: **Woodward, John Calvin et al**
**VENNER SHIPLEY & CO. 368 City Road**
**London EC1V 2QA(GB)**

(54) **An apparatus and method for supporting a carcass during pelt removal.**

(57) Apparatus for supporting a carcass during the manual removal of its pelt in which at least two spaced carcass support points (17, 8) are provided for suspending the carcass at its forward and rear parts, the position of each support point being independently movable whereby an operator may cause the apparatus to alter or reorient the position of the carcass during pelting.

Fig. 4

The invention comprises an apparatus for supporting a carcass during manual removal of the pelt thereof, and a method of pelt removal.

In the processing of an animal carcass for sale the pelt, such as the skin and fleece thereof in the case of a sheep or lamb, must be removed. Traditionally pelt removal has been effected manually by a freezing worker or slaughterman with a knife while the carcass is fixedly suspended from a point on the carcass such as the nose or one or two legs, from a rail. Various forms of automated pelting apparatus have recently been proposed. These however are generally appropriate only for larger abattoirs or works. The present invention provides a form of apparatus, or at least an alternative form of apparatus, for suspending and facilitating movement or orientation of the carcass during manual pelting by a slaughterman. The apparatus of the invention is particularly suited for smaller abattoirs. The invention also provides an improved or at least alternative pelting method.

In broad terms the invention may be said to comprise an apparatus for supporting a carcass during the manual removal of the pelt thereof, the apparatus providing at least two spaced carcass support points for suspending the carcass therefrom at forward and rear parts of the carcass respectively, the position of each of the support points being independently movable whereby an operator may cause the apparatus to alter or reorient the position of the carcass during pelting to facilitate same.

Preferably one of the support points comprises a forward support point for connecting to one or both of the forelegs of the carcass and the other of the support points comprises a rear support point for connecting to one or both of the hind legs of the carcass.

Preferably the apparatus is adapted to be positioned as part of an abattoir processing chain. The apparatus may be adapted to be positioned generally above an operator and to suspend the carcass below the apparatus such that the carcass is positioned at a working height for an operator in a standing position adjacent the apparatus; the movement of the support points comprises generally vertical up and down movement whereby either end of the carcass may be raised or lowered by the apparatus relative to the operator.

The invention also comprises a method of removing the pelt from a carcass comprising suspending the carcass from at least two spaced independently movable carcass support points at forward and rear parts of the carcass respectively, and manually removing the pelt from the carcass while by movement of the position of each of the support points causing the position of the carcass to be altered or reoriented during pelting to facilitate same.

One preferred form of apparatus of the invention is illustrated, by way of example, in the accompanying drawings. The preferred from apparatus is intended to be installed in an abattoir such that it is positioned generally above an operator such as a slaughterman or worker to suspend a carcass below the apparatus such that the carcass will be at a working height for the operator when in a standing position. The apparatus is particularly intended for smaller abattoirs as part of the abattoir processing chain where pelting is presently carried out whilst the carcasses are simply suspended by one point from the rail of the abattoir chain, by a hook for example. Typically in such an application a number of the apparatus would be provided in parallel after the stunning, killing and bleeding stages. Workers would use the apparatus for supporting the carcasses during pelting with the carcasses after pelting being fed/conveyed to the usual further processing stages.

In the accompanying drawings:

Fig. 1 is a view from the front of the preferred form apparatus,

Fig. 2 is a view from one side in the direction of arrow A in Fig. 1, of the preferred form apparatus,

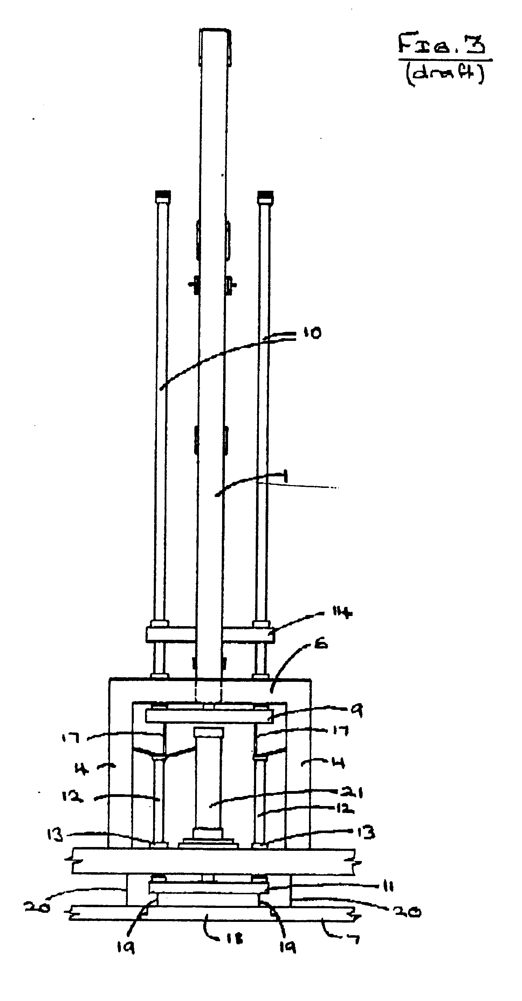

Fig. 3 is a view from the rear of the preferred form apparatus, and

Fig. 4 is a schematic diagram illustrating some of a typical sequence of positions that might be employed in use of the preferred form apparatus.

The preferred form apparatus comprises a frame including a fixed frame part formed by an upright pillar member indicated at reference numeral 1, and a right angle section 2. The frame section 2 consists of a transverse beam 3, upright members 4 extending upwardly from the beam 3 on either side of the apparatus, forwardly directed members 5 extending from the top of the upright members 4 towards the front of the apparatus, and a transverse member 6 joining the distal ends of the forwardly directed members 5. The pillar member 1 extends from the transverse member 6. The beam 3 is intended to typically form part of a structural member for supporting the apparatus or a number of adjacent apparatus above the rail 7 of the carcass conveying system in an abattoir. The beam 3 would typically extend at about head height. Carcasses progress through the various processing stages in the abattoir typically suspended by at least one hind leg from a hook such as that indicated at 8, which might be moved along the rail by a chain, or the carcasses may be moved along the rail on their hooks manually in a small works.

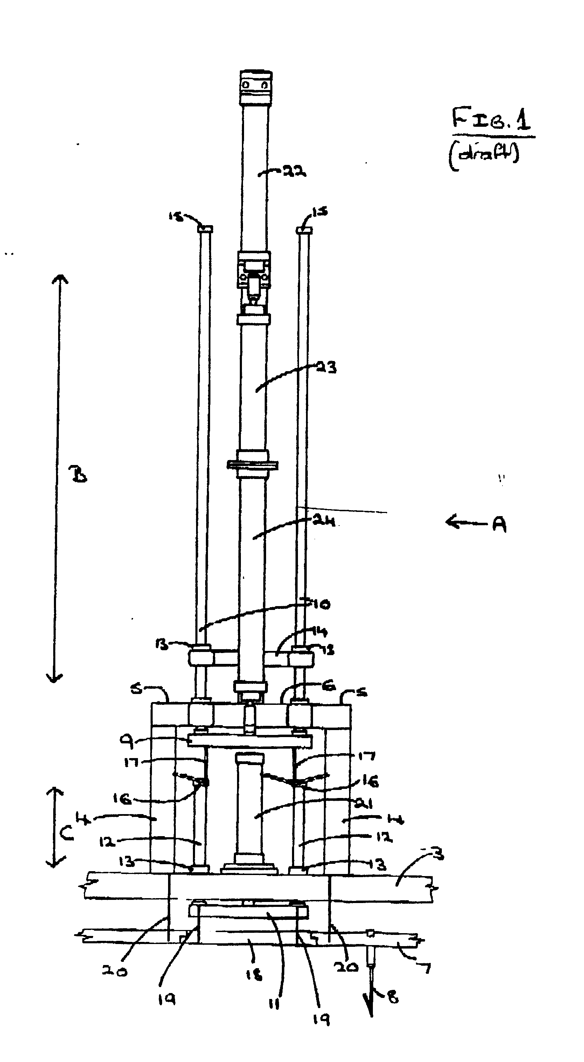

The apparatus frame comprises a forward subframe part composed in the preferred form principally of a cross member 9 and two spaced guide members 10 extending upwardly from the cross member 9 on either side of the apparatus, and a rear subframe part composed of a cross member 11 and two spaced guide members 12 similar to the guide members 10. Each of the forward and rear subframe parts is movable generally vertically in an up and down or reciprocal manner, in the direction of arrows B and C respectively in Fig. 1, relative to the fixed frame part. In the preferred form shown the guides 10 and 12 of the forward and rear subframes extend through bushes for sliding movement relative to the fixed frame part. A lower pair of bushes 13 is provided on the forward side of the transverse member 6 while an upper pair of bushes 13 is provided in a yoke 14 carried by the upright pillar 1 as shown, for the forward subframe. Bushes 13 are provided in the beam 3 for the rear subframe.

In the drawings both the forward and rear subframes are shown in their uppermost or upper positions. The forward subframe may move downwardly through a number of intermediate positions to a lowermost position wherein stops 15 provided on the upper ends of the guide members 10 abut the upper bushes 13. The rear subframe may similarly move downwardly to a lower position wherein similar stops 16 provided on the guide members 12 abut the bushes 13 in the beam 3.

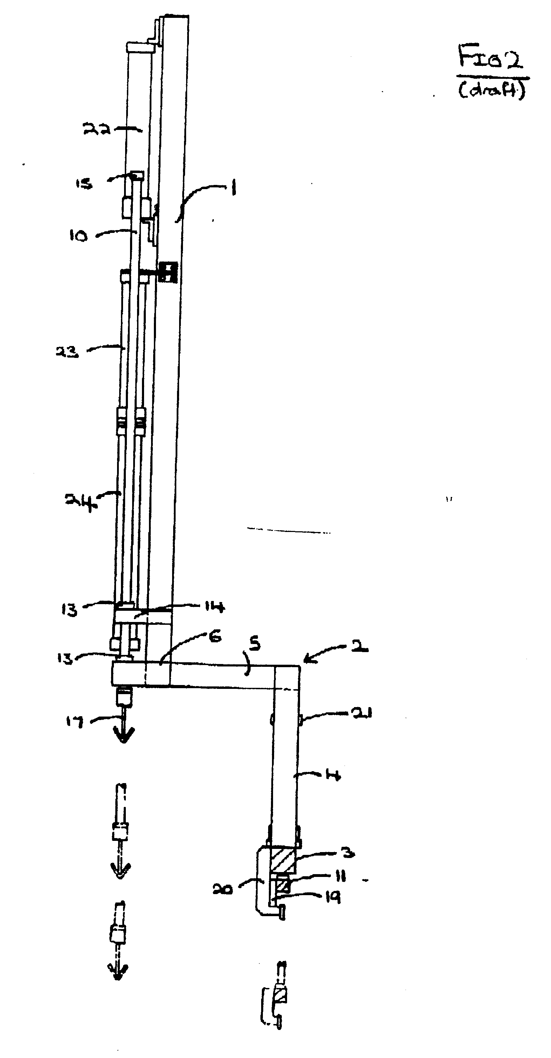

The forward and rear subframes each carry means for connecting to forward and rear parts of a carcass to be supported by the apparatus. The forward subframe carries left and right hockholding members 17 which depend downwardly from the cross-member 9 and which are adapted to have hooked thereinto the hocks of the two fore legs of a carcass on either side, so that the forward part of the carcass is suspended from the forward subframe. The rear subframe carries a rail component 18 which is supported from the cross-member 11 by members 19. The rail component 18 is adapted to interconnect with the ends on either side of the apparatus of the rail 7 of the abattoir. The ends of the rail 7 are supported adjacent the apparatus by members 20 depending from the beam 3. The arrangement is such that when the rear subframe is in its upper position as in the drawings, the rail component 18 is positioned to connect the two ends of the rail 7 as shown, while when the rear subframe is in its lower position the rail component 18 is displaced downwardly. The lower position of the rear subframe is indicated in phantom outline in Fig. 2. Two intermediate positions are indicated in phantom for the forward subframe, but the lowermost position is not shown. In use a carcass suspended from a hook 8 (Fig. 1) by a hind leg or legs may be moved along the rail 7 by the slaughterman, for example, until it is carried by the rail component 18. A foreleg or legs of the carcass may then be brought upwardly and hooked into the hockholders 17 so that the carcass is suspended belly upwards in an inverted position and the apparatus then operated to raise and lower either end of the carcass to position or orient the carcass during otherwise manual pelting.

In the preferred form apparatus the forward and rear subframes are moved by way of pneumatic rams. A ram 21 mounted to the beam 3 is provided for moving the rear subframe between its upper and lower positions. The cylinder of the ram 21 is fixed to the beam 3 while the distal end of the ram shaft is fixed to the cross member 11. An arrangement of three rams 22, 23 and 24 is provided for moving the forward subframe through its intermediate and lower most positions. The cylinder of the ram 22 is fixedly mounted to the pillar member 1 while the rams 23 and 24 are connected 'back to back' and the end of the shaft of the ram 23 is connected to the shaft of the ram 22, and the shaft of the ram 24 is connected to the cross member 9 of the forward subframe. The rams 22, 23 and 24 might have a 500mm stroke, a 400mm stroke and a 750mm stroke respectively for example. The arrangement and configuration of the rams is such that the forward support point/hockholders of the apparatus may be moved downwardly to the first position shown in phantom outline in Fig. 2, which may be a 500mm movement from the uppermost position, by operation of the ram 22, while the ram 23 may be operated in addition to cause the hockholders 17 to be moved a further 400mm to the second intermediate position shown, and the ram 24 may be operated to cause the hockholders 17 to be moved downwardly a further 750mm.

As stated, in the preferred form apparatus the forward support point comprising the hockholders 17 is movable between its uppermost and lowermost positions through a number of fixed intermediate positions. The rear support point/rear subframe is movable between its upper and lower positions. Fixed stroke pneumatic rams are employed for reasons of economy. It is possible in other arrangements to employ hydraulic rams for example, so that the forward and rear subframes or their equivalent may be moved to any position over a range rather than through preset fixed positions. The preferred form apparatus described employs the arrangement of forward and rear subframes, comprising the cross members 9 and 11 and guides members 10 and 12 passing through bushes 13 in the fixed frame part abut other arrangements of frame and subframes are possible. The preferred form apparatus is intended to be positioned adjacent the rail of the abattoir conveying system as described, with the rail component 8 carried by the rear subframe and comprising the rear support point and forming in effect part .of the abattoir conveyor rail but again other arrangements are possible.

A pneumatic operating system the rams of the apparatus may be controlled by an operator/worker from a central control panel positioned adjacent the workers position so that it is in easy reach in use whereby the worker may cause the apparatus to alter or reorient the position of the carcass as he works. It is also within the scope of the invention for the apparatus to include a control system comprising a programmed preset sequence of positions/movements of the apparatus which the worker may initiate. By way of a foot control, for example, the worker could cause the apparatus to move through these positions at a preset speed, or through each of the positions in turn with the apparatus progressing from one position to the next when the worker indicates he is ready by operating the foot control.

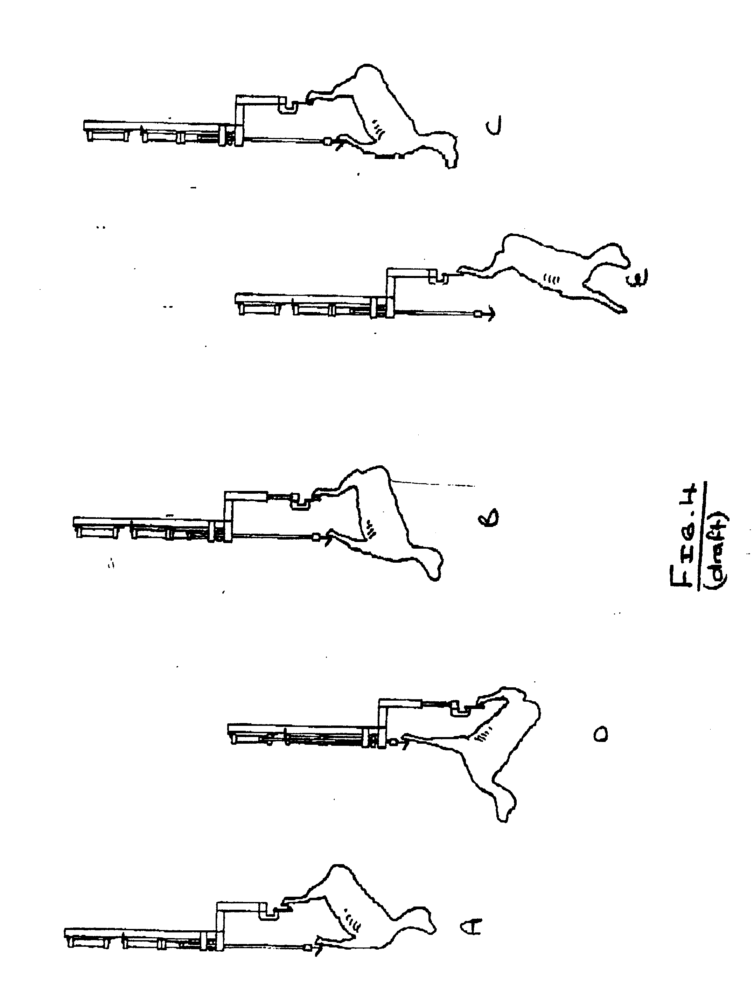

Fig. 4 in the drawings is a schematic diagram illustrating some of a typical sequence of positions that might be employed in use of the apparatus for supporting a carcass during pelt removal. Initially, when a carcass is brought along the rail 7 and onto the rail component 18 of the apparatus the rear subframe is in its upper position. Before the fore legs of the carcass are connected to the apparatus/hockholders 17 some operations may be carried out on the carcass such as clearing of the pelt from around the head for example, if desired. The hockholders 17 are moved to one of their lower or their lowermost position and the fore legs of the carcass connected thereto. The carcass/apparatus would then be in position A in Fig. 4. Operations such as clearing of the pelt from around the neck and fore legs of the carcass may be carried out before the rear subframe is moved downwardly and the hockholders 17 moved upwardly to an extent to one intermediate position, so that the carcass/apparatus is in position B in Fig 4, when the pelt may be cleared from around the ribs and belly, for example. The rear support point might then be raised to its upper position so that the carcass/apparatus is in position C, for clearing of the pelt from the rear of the carcass for example, and the hockholders 17 then moved to their uppermost position to enable the pelt to be completely pulled away from the carcass. The described series of operations is only intended to illustrate by way of example how the apparatus may be used and in any particular abattoir any particular series of operations for removing the pelt considered the most efficient might be adopted. After pelting the fore legs of the carcass would then be disconnected from the hockholders 17 so that that carcass hangs as shown in position E, and the rear support point raised so that the carcass may be conveyed to some further processing stage.

The foregoing describes the invention including a preferred form thereof. Alterations and modifications as will be obvious to those skilled in the art are intended to be incorporated within the scope hereof, which is defined in the following claims.

## Claims

1. Apparatus for supporting a carcass during the manual removal of the pelt thereof, said apparatus providing at least two spaced carcass support points for suspending said carcass therefrom at forward and rear parts of said carcass respectively, the position of each of said support points being independently movable whereby an operator may cause the apparatus to alter or reorient the position of said carcass during pelting to facilitate same.

2. Apparatus as claimed in claim 1, wherein said apparatus is adapted to be positioned generally above an operator and to suspend said carcass below the apparatus such that the carcass is positioned at a working height for an operator in a standing position adjacent the apparatus, and wherein said movement of said support points comprises generally vertical up and down movement whereby either end of the carcass may be raised or lowered by the apparatus relative to the operator.

3. Apparatus as claimed in either of claims 1 and 2, wherein said apparatus is adapted to be positioned as part of an abattoir processing chain.

4. Apparatus as claimed in claim 3, wherein said apparatus is adapted to be positioned in parallel with a number of similar apparatus in an abattoir processing chain.

5. Apparatus as claimed in any one of claims 1 to 4, wherein one of said support points comprises a forward support point for connecting to one or both of the forelegs of said carcass and the other of said support points comprises a rear support point for connecting to one or both of the hind legs of said carcass.

6. Apparatus as claimed in any one of the preceding claims, including a frame of said apparatus comprising a fixed frame part, a first movable frame part from which one of said points depends and a second movable frame part from which the other of said support points depends, said movable frame parts being supported by said fixed frame part for up and down movement relative thereto in a substantially vertical direction.

7. Apparatus as claimed in claim 6, wherein each of said forward and rear movable frame parts comprises a cross-member and two spaced substantially vertical members extending longitudinally through bearings provided in said fixed frame part for sliding movement during operation of said apparatus.

8. Apparatus as claimed in claim 7, wherein means for moving each of said forward and rear moveable frame parts comprises a hydraulic or pneumatic ram extending between the fixed frame part and the movable frame part.

9. Apparatus as claimed in any one of the preceding claims wherein one of said support points for connecting to said forward part of said carcass is adapted to move to a greater extent than the other of said support points.

10. A method for removing the pelt from a carcass, comprising suspending the carcass from at least two spaced carcass support points at forward and rear parts of said carcass respectively, and manually removing the pelt from the carcass while by movement of the position of each of said support points causing the position of said carcass to be altered or reoriented during pelting to facilitate same.

11. A method as claimed in claim 10, wherein said carcass is positioned at a working height for an operator in a standing position and wherein said movement of said support points comprises generally vertical up and down movement whereby either end of the carcass is raised or lowered relative to the operator.

12. A method as claimed in either of claims 10 and 11, wherein one of said support points comprises a forward support point connected to one or both of the forelegs of said carcass and the other of said support points comprises a rear support point connected to one or both of the hind legs of said carcass.

FIG.1
(draft)

FIG 2
(draft)

0 274 208

FIG. 3
(draft)

0 274 208

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | GB-A-2 079 135 (HAMJERN)<br>* Page 1, lines 19-48; figures 1,2 *<br>--- | 1,2,3 | A 22 B 5/16<br>A 22 B 5/06<br>A 22 B 7/00 |
| A | EP-A-0 007 469 (FAHREIN)<br>--- | | |
| A | WO-A-8 100 040 (HAMJERN)<br>----- | | |

TECHNICAL FIELDS
SEARCHED (Int. Cl.4)

A 22 B

The present search report has been drawn up for all claims

| Place of search | Date of completion of the search | Examiner |
|---|---|---|
| THE HAGUE | 02-03-1988 | VON ARX V.U. |